# EUROPEAN PATENT SPECIFICATION

(11) **EP 2 564 964 B1**
(45) Date of publication and mention of the grant of the patent: **22.01.2020**
(21) Application number: 10850761.7
(22) Date of filing: 09.12.2010
(51) Int. Cl.: B23D 49/14, B23D 59/00, B23D 51/02

(54) **CUTOFF TOOL**
ABSCHNEIDEWERKZEUG
OUTIL DE COUPE

(30) Priority: 28.04.2010 JP 2010103153
(43) Date of publication of application: 06.03.2013
(73) Proprietor: Makita Corporation, Anjo-shi, Aichi 446-8502 (JP)
(72) Inventor: OKUMURA Michio, Anjo-shi Aichi 446-8502 (JP)
(74) Representative: Kramer Barske Schmidtchen Patentanwälte PartG mbB
(86) International application number: PCT/JP2010/072120
(87) International publication number: WO 2011/135750

(56) References cited:
- JP-A- 2002 337 102
- JP-A- 2007 167 982
- US-A- 4 090 297
- US-A- 5 727 322
- US-A- 5 778 538
- US-A1- 2007 214 659
- US-A1- 2007 251 104
- US-A1- 2009 077 814

## Description

### Technical Field

The present invention relates to a cutting tool for cutting a work. The cutting tool has a tool main body and a blade. The tool main body contains a drive motor to generate a drive force. The blade is mounted to the tool main body so as to protrude from the front side of the tool main body. The drive force of the drive motor causes the blade to reciprocate in the longitudinal direction, in which it protrudes, to thereby cut the work.

### Background Art

US 2007/0251104 A1 discloses a cutting tool according to the preamble of claim 1.

Conventionally, there is known a cutting tool generally referred to as a reciprocating saw (see, for example, JP 2005-319542 A). Generally speaking, the reciprocating saw is equipped with a tool main body and a blade. The tool main body contains a drive motor to generate a drive force. The blade protrudes from the front side of the tool main body, and reciprocates in the longitudinal direction, in which it protrudes. The reciprocating saw can cut a work through the reciprocating motion of the blade. The blade attached to the tool main body of a tool of this kind is a consumable item that is replaceable.

A cutting aid is mounted to the front side of the tool main body of the reciprocating saw. The cutting aid is generally referred to as a shoe, and its relative position can be displaced so as to forwardly protrude with respect to the tool main body. When, in a cutting tool equipped with a cutting aid, the relative position of the cutting aid is displaced so as to forwardly protrude with respect to the tool main body, it is possible to set the region of the blade applied to the work. When the work is to be cut solely by the front end portion of the blade, the position of the shoe front end is set as forwardly as possible with respect to the tool main body. This makes it possible to restrict the blade region protruding forward beyond the shoe to the front end portion of the blade. Accordingly, it is possible to cut the work solely by the front end portion of the blade, making it possible to uniformly use the front end portion of the blade without involving any deviation of the blade edge due to arbitrary use of the tool user.

### Problem to be solved

As in the case of an ordinary cutting tool, also in the above-described reciprocating saw, there are generated chippings as sawdust when cutting a work. Thus, as in an ordinary cutting tool, also in the above-described reciprocating saw, there is a need for the function of sucking in chippings from the hygienic viewpoint of the operator.

However, in the above-described reciprocating saw, in which solely the blade is allowed to protrude foremost, it is rather difficult to arrange a mechanism for sucking in chippings at a position close to the blade for cutting a work.

It is an object to provide a cutting tool equipped
with a mechanism for sucking in chippings at a position in the proximity of the blade. The cutting tool is equipped with a tool main body and a blade. The tool main body contains a drive motor to generate a drive force. The blade protrudes from the front side of the tool main body, and is configured to reciprocate in the longitudinal direction, in which it protrudes, by the drive force to thereby cut work.

### Means for solving the Problem

To achieve the above object, a cutting tool according to claim 1 is provided.

A cutting tool according to a first aspect is equipped with
a tool main body and a blade. The tool main body contains a drive motor to generate a drive force. The blade is replaceable and protrudes from the front side of the tool main body. The drive force causes the blade to reciprocate in the longitudinal direction, in which the blade protrudes, to thereby cut a work. The cutting tool is equipped with a cutting aid. The cutting aid protrudes from the front side of the tool main body, and its relative position with respect to the tool main body can be displaced to set the blade region to be applied to the work. The cutting aid is provided
with a suction opening for collecting the chippings from the work cut by the blade. The suction opening is subjected to the sucking action of a dust collector provided externally or on the tool main body. The cutting aid is generally referred to as the shoe, and exhibits the function of aiding the cutting of the work.

The cutting tool according to the first aspect has in the cutting aid
the suction opening to be subjected to a sucking action to collect the chippings from the work cut by the blade. Thus, the suction opening, which is subjected to the sucking action, is provided in the cutting aid that is closest to the blade. As a result, the chippings from the work cut by the blade can be efficiently sucked at a position in close proximity to the blade.

According to a second aspect, in the cutting tool according to the
first aspect of the invention, chippings are sucked from the work cut by the blade through the suction opening and conveyed through a conveyance path, and at least a part of the conveyance path is formed by the cutting aid itself.

In the cutting tool according to the second aspect, at least a part
of the conveyance path is formed by the cutting aid itself. Accordingly, it is possible to provide the conveyance path for conveying chippings by utilizing the conventionally provided cutting aid without involving an increase in the number of components. In this way, it is possible to suppress an increase in the number of components. Thus, it is possible to provide a compact cutting tool at low production cost.

According to a third aspect, in the cutting tool according to the
first or second aspect, the suction opening is provided in a front wall portion, situated at least foremost, of wall portions constituting the cutting aid.

In the cutting tool according to the third aspect, the suction opening is provided in the front wall portion, situated at least foremost, of the wall portions forming the cutting aid. Thus, when sucking in the chippings from the work, the chippings can be sucked in from the closest portion of the cutting aid. As a result, the chippings from the work can be sucked in most efficiently.

According to a fourth aspect, in the cutting tool according to one of the first to third aspects, one of wall portions forming the cutting aid is
provided with a chippings discharge opening for discharging chippings conveyed from the work through a conveyance path to an exterior. The one of the wall portions faces in a direction in which a blade edge of the blade is directed toward the work. The discharge opening is configured to be connectable with a suction hose of a dust collector provided externally.

In a cutting tool of this type, it is common practice to cut work with the blade facing downward in the gravitational direction. In the cutting tool according to the fourth aspect, the discharge opening for discharging the chippings is provided in
the one of the wall portions forming the cutting aid. The one of the wall portions is facing in a direction in which the blade edge is directed toward the work. Thus, setting can be made such that the chippings from the work are sucked in, conveyed, and discharged along the gravitational direction, thus making it possible to smoothly remove the chippings.

### Advantageous Effects

According to the first aspect, the cutting tool can be provided
with the function of sucking in chippings at a position in the vicinity with the blade.

In the cutting tool according to the second aspect, it is possible to suppress an increase in the number of components and to achieve a reduction in production cost and a reduction in the size of the cutting tool.

In the cutting tool according to the third aspect, it is possible to
suck in the chippings from the work most efficiently.

In the cutting tool according to the fourth aspect, it is possible to perform the series of operations of sucking in the chippings from the work, conveying the chippings, and discharging the same along the gravitational direction, whereby it is possible to smoothly remove the chippings.

### Brief Description of Drawings

FIG. 1 is an external side view of a reciprocating saw;
FIG. 2 is an external front view of the reciprocating saw shown in FIG. 1;
FIG. 3 is an external front view of a shoe;
FIG. 4 is an external side view of the shoe;
FIG. 5 is a sectional view of the shoe taken along the arrow line V-V of FIG. 3;
FIG. 6 is a sectional view of the shoe taken along the arrow line VI-VI of FIG. 4;
FIG. 7 is an external bottom view of the shoe;
FIG. 8 is a side view, partly in section, of the shoe illustrating how a suction hose of a dust collector is connected; and
FIG. 9 is a side view showing a modification of the way the suction hose of FIG. 8 is connected.

### Best Mode for carrying out the Teachings

In the following, a cutting tool will be described with reference to the drawings.

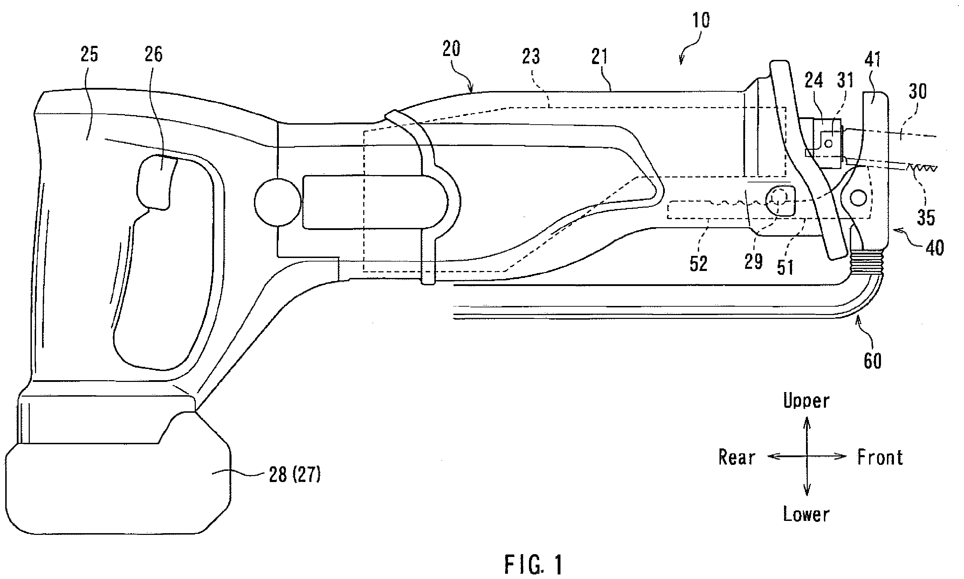

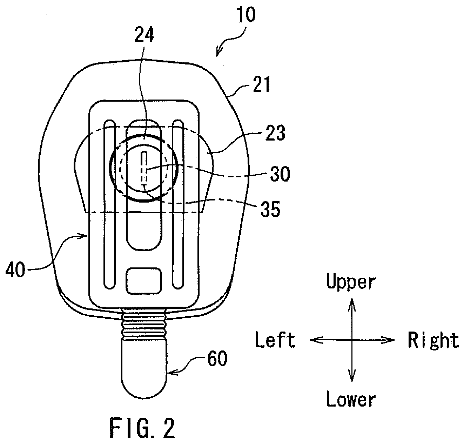

FIG. 1 is an external side view of a reciprocating saw 10 as the cutting tool. FIG. 2 is an external front view of the reciprocating saw shown in FIG. 1. The reciprocating saw 10 shown in FIGS. 1 and 2 corresponds to the cutting tool according to the present teachings. Schematically, the reciprocating saw 10 is equipped with a tool main body 20, a blade 30, and a shoe 40.

As shown in FIG. 1, the tool main body 20 contains a drive motor (not shown) to generate a drive force. Schematically, the tool main body 20 is equipped with a housing 21, a drive mechanism portion 23 provided within the housing 21, an operational handle portion 25, and a battery portion 27. The housing 21 functions as an exterior case, and contains electrical components such as the drive mechanism portion 23. The drive mechanism portion 23, which is schematically shown, is provided within the housing 21, and contains a drive motor and a drive force transmission mechanism as appropriate. The drive mechanism portion 23 is of a configuration extending in the longitudinal direction (in the horizontal direction as seen in FIG. 1). At the front end of the drive mechanism portion 23, there is provided a mounting portion 24 for mounting the blade 30. A reciprocating drive force is transmitted to the mounting portion 24 from the drive mechanism portion 23 via an appropriate drive force transmission mechanism.

When the reciprocating saw 10 is to be used, the operational handle portion 25 is grasped by the user. In view of this, the operational handle portion 25 is formed in a grip configuration allowing itself to be grasped by the user. The operational handle portion 25 is provided with an operating trigger 26 at a position corresponding to the index finger of the hand of the user. When pulled, the operating trigger 26 transmits a drive-on control signal to the drive mechanism portion 23.

The battery portion 27 is equipped with a rechargeable lithium ion battery 28. The battery portion 27 supplies power for driving the drive mechanism portion 23. The lithium ion battery 28 constituting the battery portion 27 is detachable so as to allow being recharged by a dedicated charger. The lower side as seen in FIG. 1 is the side where the battery portion 27 is arranged on the reciprocating saw 10.

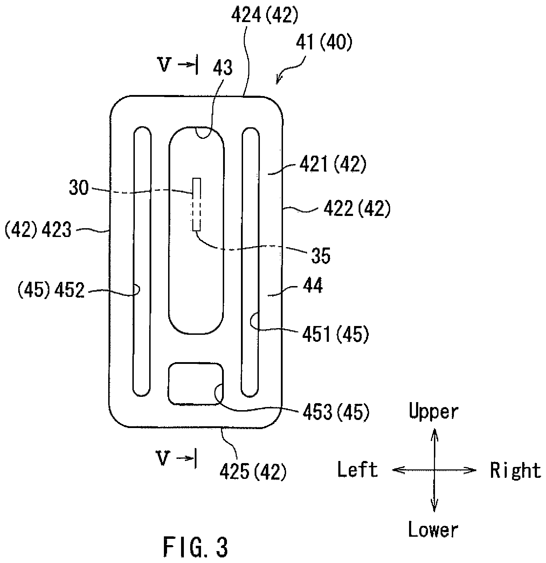

The blade 30 is arranged so as to protrude from the front side of the tool main body 20. More specifically, as described above, a rear end portion 31 of the blade 30 is mounted to the mounting portion 24 situated at the front end of the drive mechanism portion 23. The blade 30, a portion (front end portion) of which is omitted in FIG. 1 as appropriate, is of an elongated, thin and narrow configuration extending from the rear end portion 31 to the front end portion thereof. The rear end portion 31 of the blade 30 is mounted to the mounting portion 24. The blade 30, which is of an elongated, thin and narrow configuration, has on the lower side thereof an edge 35 for cutting a work. In other words, the reciprocating saw 10 cuts a work by moving the tool main body 20 downwards from above with the edge 35 directed downwardly in the gravitational direction. Accordingly, the blade 30 mounted to the mounting portion 24 has a one-side edge solely on the lower side, i.e., on the side where the battery portion 27 of the tool main body 20 is arranged. The blade 30 longitudinally reciprocates due to the drive force of the drive mechanism portion 23. Thus, the edge 35 of the reciprocating blade is applied to the work while reciprocating, making it possible to cut the work. The front end portion (not shown) of the blade 30 is situated further beyond a shoe main body 41 (described below) which arranged in front of the tool main body 20. Thus, blade 30 extends through a blade through-hole 43 formed in the shoe main body 41 (See FIG. 3) to protrude forward beyond the shoe main body 41.

Next, the shoe 40, which corresponds to the cutting aid according to the present teachings, will be described. As shown in FIG. 1, the shoe 40 is supported by the tool main body 20, and protrudes from the front side of the tool main body 20. The relative position of the shoe 40 with respect to the tool main body 20 can be changed. The shoe 40 allows the setting of the cutting region of the blade 30 to be applied to the work according to the relative position of the shoe 40 with respect to the tool main body 20.

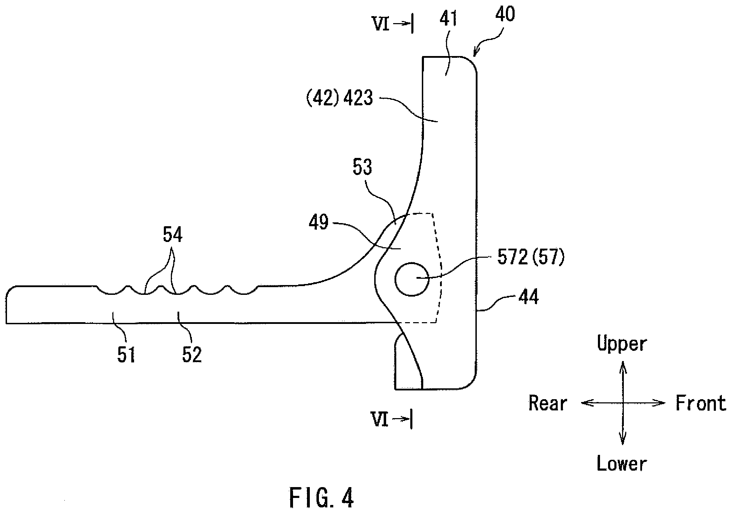

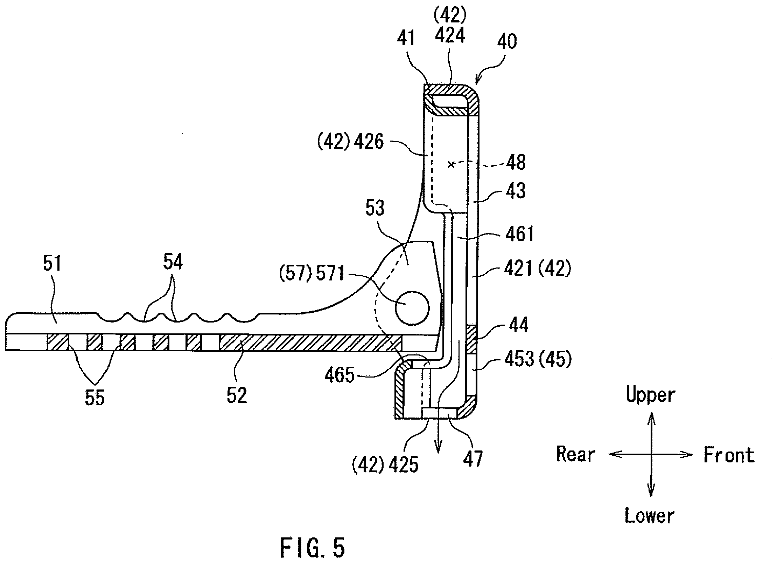

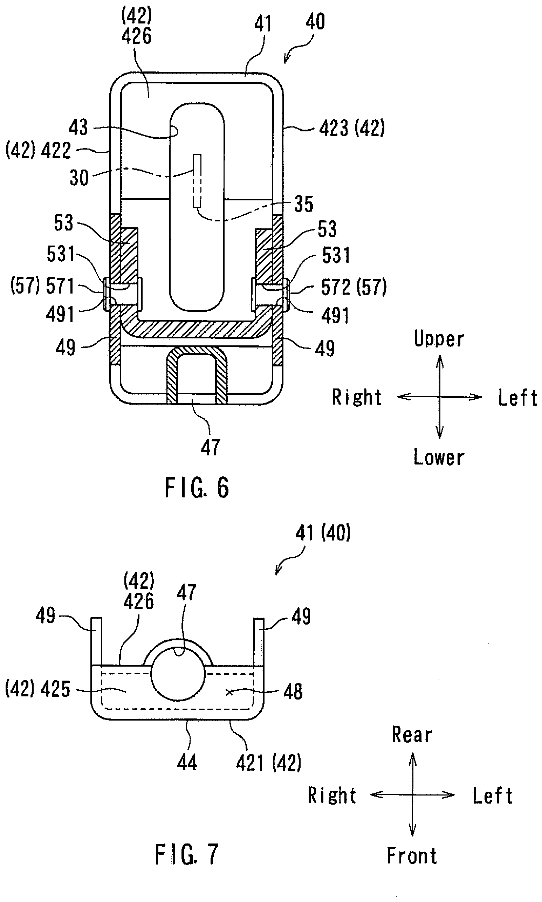

FIG. 3 is an external front view of the shoe 40. FIG. 4 is an external side view of the shoe 40. FIG. 5 is a sectional view of the shoe 40 taken along the arrow line V-V of FIG. 3. FIG. 6 is a sectional view of the shoe 40 taken along the arrow line VI-VI of FIG. 4. FIG. 7 is an external bottom view of the shoe 40.

As shown in FIGS. 3 and 4, schematically speaking, the shoe 40 is equipped with the shoe main body 41, a stay portion 51, and a shaft portion 57 connecting the shoe main body 41 and the stay portion 51 so as to allow rocking motion.

As stated above, the shoe 41 is provided for the purpose of setting the cutting region of the blade 30 with respect to the work. The shoe 41 is supported by the stay portion 51 described below for adjusting its relative position with respect to the tool main body 20. More specifically, as shown in FIGS. 3 to 7, the shoe main body 41 has wall portions 42 respectively on the front, rear, left, right, upper, and lower sides thereof. As shown in FIG. 3, the shoe main body 41 has a front surface wall portion 421 provided on the front portion matching the foremost surface, left and right side surface wall portions 422 and 423 provided on the left and right portions, upper and lower surface wall portions 424 and 425 provided on the upper and lower portions, a rear surface wall portion 426 (See FIG. 5) provided on the rear portion, and an interior hollow portion. The front, rear, left, right, upper and lower wall portions 42 respectively exhibit appropriate configurations.

The shoe main body 41 has a structure in which the blade 30 mounted to the mounting portion 24 of the tool main body 20 extends through the through-hole 43 to protrude forward. More specifically, the through-hole 43 is formed as shown in FIG. 3, etc. The through-hole 43 exhibits an appropriate lateral width at a substantially central position of the shoe main body 41, and extends in the vertical direction. The blade through-hole 43 is formed by cutting out the front surface wall portion 421 and the rear surface wall portion 426 of the wall portions 42 of the shoe main body 41. The blade 30 extends through the blade through-hole 43 at its interior, somewhat upper position. More specifically, the blade through-hole 43 exhibits a clearance below the blade 30 arranged within the blade through-hole 43 and a clearance above the same. In the lower clearance (with respect to the cutting direction), there is situated the edge 35 of the blade 30, and, in the upper clearance, the edge 35 of the blade 30 is not situated. The lower clearance is larger than the upper clearance.

To collect chippings from the work cut by the blade 30, the shoe main body 41 is provided with suction openings 45 (451, 452, and 453), 461, and 465. The suction openings 45, 461, and 465 are subjected to the sucking action of a dust collector (not shown) provided on the outside. A plurality of the suction openings 45, 461, and 465 are provided in appropriate wall portions 42 so as to establish communication between the interior and the exterior of the shoe main body 41.

The shoe main body 41 has in its interior a hollow formed by each wall portion 42. The hollow inside the shoe main body 41 is formed as a chippings conveyance path 48 for conveying the chippings from the work sucked in via the suction openings 45, 461, and 465 to a discharge opening 47. That is, as described in detail below, by virtue of a suction airflow (sucking action) due to the dust collector installed on the outside, the chippings from the work are sucked in via the suction openings 45, 461, and 465, and are discharged to the exterior of the shoe main body 41 from the discharge opening 47 via the conveyance path 48.

Next, the suction openings 45, 461, and 465 will be described in detail.

As shown in FIG. 3, the front surface wall portion 421 of the shoe main body 41 constitutes the foremost surface 44 of the shoe 40. The front surface suction openings 45 are provided in the front surface wall portion 421. Of the chippings from the work (sawdust), the chippings generated in front of the shoe 40 are advantageously sucked in by the front surface suction openings 45. More specifically, the front surface suction openings 45 include three openings 451, 452, and 453. The front surface openings 45 include a first front surface suction opening 451 and a second front surface suction opening 452 situated on the left and right sides of the blade through-hole 43. The first front surface suction opening 451 and the second front surface suction opening 452 have a similar configuration and are formed as vertically elongated holes. The length in the vertical direction of the first front surface suction opening 451 and the second front surface suction opening 452 is larger than the length in the vertical direction of the blade through-hole 43. A third front surface suction opening 453 is situated under the blade through-hole 43 and is formed as a hole of a substantially rectangular configuration in front view. The lateral width of the third front surface suction opening 453 is set to a dimension similar to that of the blade through-hole 43. The regions of the first front surface suction opening 451, the second front surface suction opening 452, and the third front surface suction opening 453 which are below the edge 35 of the blade 30 are open by a larger dimension than the regions thereof above the same. The reason for this design is that more chippings are generated from the work in the portions situated on the lower side (in the gravitational direction) of the edge 35 of the blade 30 than in the portions on the upper side thereof.

As shown in FIGS. 5 and 6, the inner suction opening 461 is provided in the inner peripheral portions on the left and right sides forming the blade through-hole 43. More specifically, the inner suction opening 461 is provided such that the portions of the inner peripheral portions on the left and right sides forming the blade through-hole 43 which are situated below the edge 35 of the blade 30 establish communication between the interior and exterior of the shoe main body 41. The inner suction opening 461 is shaped so as to be continuous with a lower suction opening 465 described below.

As shown in FIGS. 5 and 6, the lower suction opening 465 is provided in the lower inner peripheral portion of the blade through-hole 43, and extends along the opening direction of a discharge opening 47 described below. As shown in FIG. 5, the lower side suction opening 465 is formed so as to be continuous with the inner suction opening 461, and extends slightly rearward from the inner suction opening 461.

As shown in FIG. 7, the discharge opening 47 is provided in a lower surface wall portion 425 of the wall portions 42 constituting the shoe main body 41. The lower surface wall portion 425 faces in a direction in which the edge 35 of the blade 30 is directed toward the work. The discharge opening 47 is provided for the purpose of discharging to the exterior the chippings sucked in through the suction openings 45 (451, 452, and 453), 461, and 465 and conveyed via the conveyance path 48. The discharge opening 47 communicates with the conveyance path 48 for conveying chippings. The discharge opening 47 is configured to be connectable with a suction hose 60 of a dust collector (not shown) to be described below, which is installed on the outside.

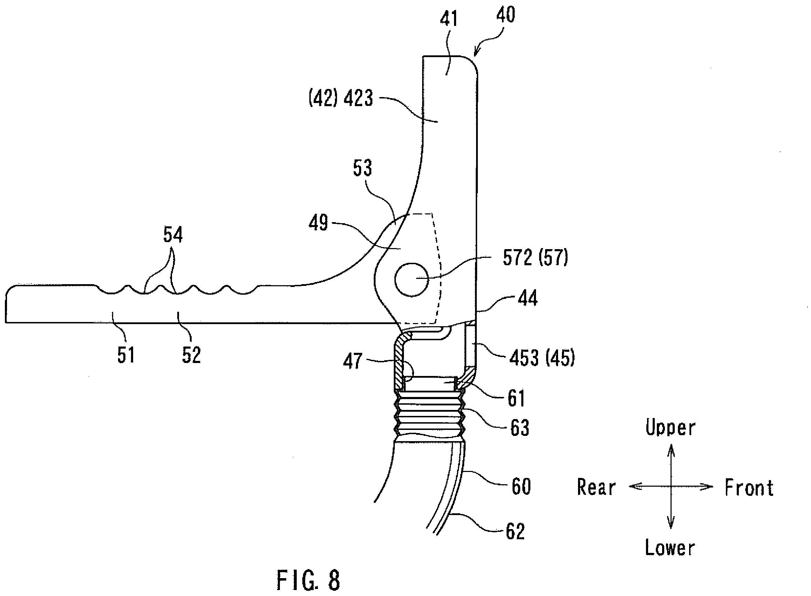

FIG. 8 is a side view, partly in section, illustrating how the suction hose 60 of the dust collector (not shown) is connected to the discharge opening 47. As shown in FIG. 8, the discharge opening 47 has an opening configuration that allows a connection port 61 of the suction hose 60 to be connected to the discharge opening 47. More specifically, as shown in FIG. 7, the discharge opening 47 has a circular configuration in conformity with the opening configuration of the connection port 61 of the suction hose 60. The suction hose 60 has a hose main body 62 and a deformable bellows portion 63 allowing the orientation of the connection port 61 to be flexibly changed with respect to the hose main body 62. The connection port 61 of the suction hose 60 is inserted into the discharge opening 47 of the shoe main body 41 as appropriate for mutual connection.

As shown in FIGS. 4 and 7, formed on the rear side portions of left and right side surface wall portions 422 and 423 of the shoe main body 41 are mounting portions 49 for connecting the shoe main body 41 to a stay portion 51 to be described below. The mounting portions 49 extend further rearwards from the rear side portions of the left and right side surface wall portions 422 and 423. As shown in FIG. 6, the mounting portions 49 are provided with pivotal holes 491 extending horizontally through them. Inserted into the pivotal holes 491 are shaft portions 57 (571 and 572) for connecting the shoe main body 41 to the stay portion 51 described below so as to allow rocking motion. The shaft portions 57 (571 and 572) are inserted into pivotal holes 531 provided in the stay portion 51 described below.

Next, the stay portion 51 to which the shoe main body 41 is rockably connected via the shaft portions 57 (571 and 572) will be described.

The stay portion 51 supports the shoe main body 41 rockably connected thereto via the shaft portions 57 (571 and 572). The stay portion 51 adopts a conventional construction. That is, as shown in FIGS. 4 and 5, schematically speaking, the stay portion 51 is equipped with a slide support portion 52 and mounting portions 53. As shown in FIG. 1, the slide support portion 52 is inserted into the tool main body 20 (inner insertion port) in the longitudinal direction, in which the tool main body 20 extends, to be supported by the tool main body 20. As a result, the slide support portion 52 extends in the longitudinal direction, in which the drive mechanism portion 23 of the tool main body 20 extends, and can slide in the longitudinal direction with respect to the tool main body 20. As shown in FIG. 5, provided at the side end edge of the slide support portion 52 is a chevron-shaped portion 54 having alternate recesses and protrusions on the upper surface portion thereof. As shown in FIG. 1, the chevron-shaped portion 54 is fit-engaged with a fastening shaft portion 29 provided inside the tool main body 20. In the intermediate portion of the slide support portion 52, there is provided a plurality of fit-engagement holes 55 vertically extending through the same, at equal intervals along the longitudinal direction of the tool main body 20. The fit-engagement holes 55 are configured to be fit-engaged with a fit-engagement protrusion (not shown) provided inside the tool main body 20. The slide support portion 52 slides with respect to the tool main body 20. The relative position of the slide support portion 52 is determined through the fit-engagement of the fit-engagement holes 55 and through the fit-engagement between the chevron-shaped portion 54 and the shaft portion 29. The slide support portion 52 is supported by the tool main body 20.

As shown in FIGS. 4 and 5, the mounting portions 53 are formed so as to extend from the front end portion of the slide support portion 52. As shown in FIG. 6, the mounting portions 53 are formed so as to be bent as appropriate. Thus, as shown in FIG. 6, the mounting portions 53 are arranged adjacent to the mounting portions 49 of the shoe main body 41 described above. Like the mounting portions 49 of the shoe main body 41 described above, the mounting portions 53 are provided with pivotal holes 531 extending laterally through the mounting portions 53. The shaft portions 57 (571 and 572) are inserted into the pivotal holes 531 of the stay portion 51 as well as into the pivotal holes 491 of the shoe main body 41. The shaft portions 57 (571 and 572) thus inserted are crimped so as not to be detached from the pivotal holes 491 and 531. Due to the configuration of the front end portion of the stay portion 51, the shoe main body 41 thus connected to the stay portion 51 can be rocked with respect to the stay portion 51.

The reciprocating saw 10, constructed as described above, exhibits the following advantages.

In the reciprocating saw 10, the shoe main body 41 is provided with suction openings 45 (451, 452, and 453), 461, and 465, which are subjected to a sucking action to collect the chippings from the work cut by the blade 30. Thus, the suction openings 45 (451, 452, and 453), 461, and 465, which are subjected to the sucking action, are provided in the shoe main body 41, which is closest to the blade 30. As a result, the chippings from the work cut by the blade 30 can be efficiently sucked in at a position in close proximity to the blade 30.

In the reciprocating saw 10, the conveyance path 48 for conveying the chippings from the work sucked in via the suction openings 45 (451, 452, and 453), 461, and 465 is formed by the shoe main body 41 itself. Thus, it is possible to provide the conveyance path 48 for conveying the chippings by utilizing the conventionally existing shoe main body 41 without an increase in the number of components. In this way, it is possible to suppress an increase in the number of components and to achieve a reduction in production cost and in the size of the reciprocating saw 10.

In the reciprocating saw 10, the suction openings 45 (451, 452, and 453), 461, and 465 are provided in the front surface wall portion 421 situated at the foremost surface 44 of the wall portions 42 forming the shoe main body 41. Thus, when sucking in the chippings from the work, it is possible to suck in the chippings via one portion of the shoe main body 41 closest to the place where the chippings are generated from the work. As a result, it is possible to suck in the chippings most efficiently.

In the reciprocating saw 10, the work is cut with the cutter edge 35 being directed downwards in the gravitational direction. In the reciprocating saw 10, there is provided the discharge opening 47 for discharging chippings. The discharge opening 47 is provided in one of the wall portions 42 forming the shoe main body 41. One of the wall portions 42 faces in the direction in which the edge 35 of the blade 30 is directed. Accordingly, it can be set such that the chippings generated from the work are sucked in, conveyed, and discharged without being against the gravitational force. Thus, it makes possible to smoothly remove the chippings.

The above-described embodiment of the cutting tool according to the present teachings should not be construed restrictively; it allows the following modifications as appropriate.

For example, the suction openings of the cutting tool according to the present teachings are not restricted to the suction openings 45 (451, 452, and 453), 461, and 465 of the above embodiment but may also be ones provided at appropriate positions of the wall portions 42.

The suction openings 45, 461, and 465 according to the embodiment are subjected to the sucking action of the dust collector (not shown) provided on the outside. Instead of providing the dust collector on the outside, the dust collector can also possible be provided on the tool main body.

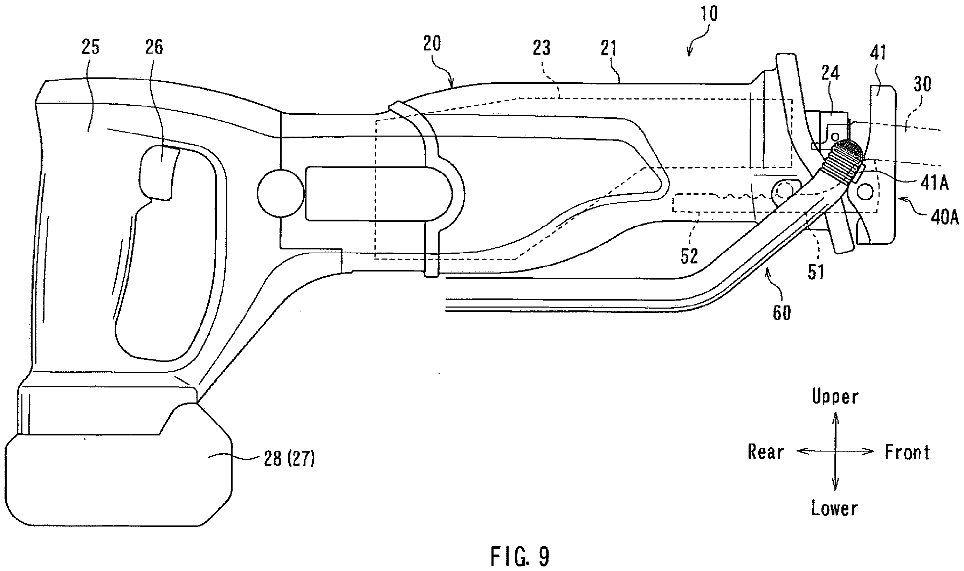

FIG. 9 is a side view showing a modification of the way the suction hose 60 of FIG. 8 is connected. As shown in FIG. 9, the connection of the suction hose 60 to the shoe main body 41 is not restricted to that from the lower side of the shoe main body 41. It is also possible to connect the suction hose 60 to a mounting portion 41A provided on shoe 40A as appropriate.

### Reference Sings List

- 10: Reciprocating saw (Cutting tool)
- 20: Tool main body
- 21: Housing
- 23: Drive mechanism portion
- 24: Mounting portion
- 25: Operational handle portion
- 26: Operating trigger
- 27: Battery portion
- 28: Lithium ion battery
- 29: Shaft portion
- 30: Blade
- 31: Rear end portion
- 35: Edge
- 40, 40A: Shoe
- 41: Shoe main body
- 41A: Mounting portion
- 42: Wall portion
- 421: Front surface wall portion
- 422: Left side surface wall portion
- 423: Right side surface wall portion
- 424: Upper surface wall portion
- 425: Lower surface wall portion
- 426: Rear surface wall portion
- 43: Blade through-hole
- 44: Foremost surface
- 45: (Front surface) Suction opening
- 451: (First front surface) Suction opening
- 452: (Second front surface) Suction opening
- 453: (Third front surface) Suction opening
- 461: (Inner) Suction opening
- 465: (Lower) Suction opening
- 47: Discharge opening
- 48: Conveyance path
- 49: Mounting portion
- 491: Pivotal hole
- 51: Stay portion
- 52: Slide support portion
- 53: Mounting portion
- 531: Pivotal hole
- 54: Chevron-shaped portion
- 55: Fit-engagement hole
- 57 (571 and 572): Shaft portion
- 60: Suction hose
- 61: Connection port 1
- 62: Hose main body
- 63: Deformable bellows portion

## Claims

1. A cutting tool (10) comprising
a tool main body (20) containing a drive motor to generate a drive force, wherein the tool main body (20) is equipped with a housing (21) and a drive mechanism portion (23) provided within the housing (21), wherein the drive mechanism portion (23) is of a configuration extending in a longitudinal direction of the tool main body (20), wherein the longitudinal direction corresponds to a front-rear direction,
a blade (30) mounted to a mounting portion (24) provided at a front end of the drive mechanism portion (23), wherein the blade (30) is replaceable and is arranged so as to protrude forward from a front side of the tool main body (20), and the blade (30) is reciprocated in the longitudinal direction, in which the blade (30) protrudes, by the drive force to thereby cut a work, and
a cutting aid (40; 40A) protruding from the front side of the tool main body (20), wherein the cutting aid (40; 40A) is adapted to allow the setting of a cutting region of the blade to be applied to the work according to the relative position of the cutting aid (40; 40A) with respect to the tool main body (20),
wherein the cutting aid (40) includes a shoe main body (41), a stay portion (51), and a shaft portion (57) connecting the shoe main body (41) and the stay portion (51),
wherein the stay portion (51) comprises a slide support portion (52) and mounting portions (53), and
wherein the slide support portion (52) is inserted into the tool main body (20) in the longitudinal direction to be supported by the tool main body (20) such that the slide support portion (52) extends in the longitudinal direction and can slide in the longitudinal direction with respect to the tool main body (20), thereby the cutting aid (40) is supported by the tool main body (20) such that the relative position of the cutting aid (40) with respect to the tool main body (20) can be changed,
**characterized in that**
the cutting aid (40; 40A) is provided with a suction opening (45) for collecting chippings from the work cut by the blade (30), and the suction opening (45) is subjected to the sucking action of a dust collector provided externally or on the tool main body (20).

2. The cutting tool (10) of claim 1, wherein chippings are sucked from the work cut by the blade (30) through the suction opening (45) and conveyed through a conveyance path (48), and at least a part of the conveyance path (48) is formed by the cutting aid itself (40; 40A).

3. The cutting tool (10) of claim 1 or 2, wherein the suction opening (45) is provided in a front wall portion (421), situated at least foremost, of wall portions forming the cutting aid (40; 40A).

4. The cutting tool (10) of one of claims 1 to 3, wherein one of wall portions forming the cutting aid (40) is provided with a chippings discharge opening (47) for discharging chippings conveyed from the work through a conveyance path (48) to an exterior, and the one of the wall portions faces in a direction in which a blade edge (35) of the blade (30) is directed toward the work, and
the discharge opening (47) is configured to be connectable with a suction hose of a dust collector provided externally.

5. The cutting tool (10) of any one of claims 1 to 4, wherein
the cutting aid (40) includes a shoe main body (41), a stay portion (51), and a shaft portion (57) connecting the shoe main body (41) and the stay portion (51), wherein the shoe main body (41) comprises a front surface wall portion (421), left and right side surface wall portions (422, 423), upper and lower surface wall portions (424, 425), a rear surface wall portion (426), and an interior hollow portion,
a blade through-hole (43) through which the blade (30) extends is formed in the front surface wall portion (421) and the rear surface wall portion (426), and
the interior hollow portion of the shoe main body (41) is formed as a chippings conveyance path (48) for conveying chippings from the work sucked in via the suction opening (45).

6. The cutting tool (10) of claim 5, wherein
the front surface wall portion (421) is provided with front surface suction openings (45),
the front surface suction openings (45) include a first front surface suction opening (451) and a second front surface suction opening (452) situated on left and right sides of the blade through-hole (43), and
lengths in a vertical direction of the first front surface suction opening (451) and the second front surface suction opening (452) are larger than the length in the vertical direction of the blade through-hole (43).

## Patentansprüche

1. Schneidwerkzeug (10), mit
einem Werkzeughauptkörper (20), der einen Antriebsmotor zum Erzeugen einer Antriebskraft enthält, bei dem der Werkzeughauptkörper (20) mit einem Gehäuse (21) und einem Antriebsmechanismusbereich (23), der innerhalb des Gehäuses (21) vorgesehen ist, ausgestattet ist, bei dem der Antriebsmechanismusbereich (23) aus einer Konfiguration besteht, die sich in einer Längsrichtung des Werkzeughauptkörpers (20) erstreckt, bei dem die Längsrichtung einer Vorder-Rück-Richtung entspricht,
einem Schneidblatt (30), das an einem Montagebereich (24) montiert ist, der an einem vorderen Ende des Antriebsmechanismusbereiches (23) vorgesehen ist, bei dem das Schneidblatt (30) austauschbar ist und derart angeordnet ist, dass es nach vorne von einer vorderen Seite des Werkzeughauptkörpers (20) vorsteht, und das Schneidblatt (30) in der Längsrichtung, in welcher das Schneidblatt (30) vorsteht, durch die Antriebskraft hin und her bewegt wird, um dabei ein Werkstück zu schneiden, und
einer Schneidhilfe (40; 40A), die von der vorderen Seite des Werkzeughauptkörpers (20) vorsteht, bei dem die Schneidhilfe (40; 40A) dazu angepasst ist, das Festlegen eines Schneidbereiches der Schneide, der dem Werkstück gemäß der relativen Position der Schneidhilfe (40; 40A) in Bezug auf den Werkzeughauptkörper (20) aufgebracht wird, zu ermöglichen,
bei dem die Schneidhilfe (40) einen Schuhhauptkörper (41), einen Stützbereich (51) und einen Schaftbereich (57) aufweist, der den Schuhhauptkörper (41) mit dem Stützbereich (51) verbindet,
bei dem der Stützbereich (51) einen Gleitlagerungsbereich (52) und Montagebereiche (53) aufweist, und
bei dem der Gleitlagerungsbereich (52) in den Werkzeughauptkörper (20) in der Längsrichtung zum Lagern des Werkzeughauptkörpers (20) derart eingeführt wird, dass sich der Gleitlagerungsbereich (52) in der Längsrichtung erstreckt und in der Längsrichtung in Bezug auf den Werkzeughauptkörper (20) gleiten kann und dabei die Schneidhilfe (40) durch den Werkzeughauptkörper (20) gelagert wird, so dass die relative Position der Schneidhilfe (40) in Bezug auf den Werkzeughauptkörper (20) geändert werden kann,
**dadurch gekennzeichnet, dass**
die Schneidhilfe (40; 40A) mit einer Ansaugöffnung (45) zum Sammeln von Spänen von dem Werkstück, das durch das Schneidblatt (30) geschnitten wird, vorgesehen ist, und die Ansaugöffnung (45) der Saugwirkung eines Staubsammlers unterliegt, der extern oder an dem Werkzeughauptkörper (20) vorgesehen ist.

2. Schneidwerkzeug (10) nach Anspruch 1, bei dem die Späne von dem Werkstück, das durch das Schneidblatt (30) geschnitten wird, durch die Saugöffnung (45) gesaugt werden und über einen Transportweg (48) transportiert werden, und zumindest ein Teil des Transportweges (48) ist durch die Schneidhilfe (40; 40A) selbst ausgebildet.

3. Schneidwerkzeug (10) nach Anspruch 1 oder 2, bei dem die Ansaugöffnung (45) in einem vorderen Wandbereich (421) vorgesehen ist, der sich zumindest am weitesten vorne von Wandbereichen, die die Schneidhilfe (40; 40A) ausbilden, befindet.

4. Schneidwerkzeug (10) nach einem der Ansprüche 1 bis 3, bei dem einer der Wandbereiche, die die Schneidhilfe (40) ausbilden, mit einer Späneableitungsöffnung (47) zum Ableiten der Späne, die von dem Werkstück über den Transportweg (48) transportiert werden, zu einer Außenseite, und der eine der Wandbereiche ist in einer Richtung, in welcher eine Schneidkante (35) des Schneidblattes (30) in Richtung des Werkstückes gerichtet ist, gerichtet, und
die Ableitungsöffnung (47) dazu konfiguriert ist, mit einem Ansaugschlauch eines Staubsammlers, der extern vorgesehen ist, verbindbar zu sein.

5. Schneidwerkzeug (10) nach einem der Ansprüche 1 bis 4, bei dem
die Schneidhilfe (40) einen Schuhhauptkörper (41), einen Stützbereich (51) und einen Schaftbereich (57) aufweist, der den Schuhhauptkörper (41) mit dem Stützbereich (51) verbindet, bei dem der Schuhhauptkörper (41) einen vorderen Oberflächenwandbereich (421), einen linken und einen rechten Seitenoberflächenwandbereich (422, 423), einen oberen und einen unteren Oberflächenwandbereich (424, 425), einen hinteren Oberflächenwandbereich (426) und einen inneren hohlen Bereich aufweist,
ein Schneidblattdurchgangsloch (43), durch welches sich das Schneidblatt (30) erstreckt, in dem vorderen Oberflächenwandbereich (421) und dem hinteren Oberflächenwandbereich (426) ausgebildet ist, und
der innere hohle Bereich des Schuhhauptkörpers (41) als ein Spänetransportweg (48) zum Befördern der Späne von dem Werkstück, die über die Ansaugöffnung (45) angesaugt werden, ausgebildet ist.

6. Schneidwerkzeug (10) nach Anspruch 5, bei dem
der vordere Oberflächenwandbereich (421) mit vorderen Oberflächenansaugöffnungen (45) vorgesehen ist,
die vorderen Oberflächenansaugöffnungen (45) eine erste vordere Oberflächensaugöffnung (451) und eine zweite vordere Oberflächenansaugöffnung (452) aufweisen, die sich an der linken und rechten Seite des Blattdurchgangsloches (43) befinden, und
Längen in einer vertikalen Richtung der ersten vorderen Oberflächensansaugöffnung (451) und der der zweiten vorderen Oberflächenansaugöffnung (452) größer als die Länge in der vertikalen Richtung des Blattdurchgangsloches (43) sind.

## Revendications

1. Outil de coupe (10) comprenant
un corps principal d'outil (20) contenant un moteur d'entraînement pour générer une force d'entraînement, dans lequel le corps principal d'outil (20) est équipé d'un boîtier (21) et d'une partie de mécanisme d'entraînement (23) prévue dans le boîtier (21), dans lequel la partie de mécanisme d'entraînement (23) a une configuration s'étendant dans une direction longitudinale du corps principal d'outil (20), dans lequel la direction longitudinale correspondant à une direction avant arrière,
une lame (30) montée sur une partie de montage (24) prévue à une extrémité avant de la partie de mécanisme d'entraînement (23), où la lame (30) est remplaçable et est agencée de manière à faire saillie vers l'avant depuis un côté avant du corps principal d'outil (20), et la lame (30) effectue des mouvements de va-et-vient dans la direction longitudinale, dans laquelle la lame (30) dépasse, par la force d'entraînement pour couper ainsi une pièce, et
un auxiliaire de coupe (40; 40A) dépassant de la face avant du corps principal d'outil (20), où l'auxiliaire de coupe (40 ; 40A) est adapté pour permettre le réglage d'une région de coupe de la lame à appliquer à la pièce selon la position relative de l'auxiliaire de coupe (40 ; 40A) par rapport au corps principal d'outil (20),
où l'auxiliaire de coupe (40) comprend un corps principal de sabot (41), une partie d'étai (51) et une partie de tige (57) reliant le corps principal de sabot (41) et la partie d'étai (51),
où la partie d'étai (51) comprend une partie de support de glissière (52) et des parties de montage (53), et
où la partie de support de glissière (52) est insérée dans le corps principal d'outil (20) dans la direction longitudinale devant être supportée par le corps principal d'outil (20) de sorte que la partie de support de glissière (52) s'étend dans la direction longitudinale et peut glisser dans la direction longitudinale par rapport au corps principal d'outil (20), de sorte que l'auxiliaire de coupe (40) est soutenue par le corps principal d'outil (20) de sorte que la position relative de l'auxiliaire de coupe (40) puisse être modifiée par rapport au corps principal d'outil (20),
**caractérisé en ce que**
l'auxiliaire de coupe (40; 40A) est munie d'une ouverture d'aspiration (45) pour collecter des copeaux de la pièce coupée par la lame (30), et l'ouverture d'aspiration (45) est soumise à l'action d'aspiration d'un collecteur de poussière prévu à l'extérieur ou sur le corps principal d'outil (20).

2. Outil de coupe (10) selon la revendication 1, dans lequel des copeaux sont aspirés de la pièce coupée par la lame (30) à travers l'ouverture d'aspiration (45) et transportés à travers un trajet de transport (48), et au moins une partie du trajet de transport (48) est formée par l'auxiliaire de coupe (40 ; 40A) elle-même.

3. Outil de coupe (10) selon la revendication 1 ou 2, dans lequel l'ouverture d'aspiration (45) est prévue dans une partie de paroi frontale (421), située au moins en avant, de parties de paroi formant l'auxiliaire de coupe (40 ; 40A).

4. Outil de coupe (10) selon l'une des revendications 1 à 3, dans lequel l'une des parties de paroi formant l'auxiliaire de coupe (40) est munie d'une ouverture d'évacuation de copeaux (47) pour évacuer des copeaux transportés de la pièce par un trajet de transport (48) vers un extérieur, et la partie parmi les parties de paroi fait face à une direction dans laquelle un bord de lame (35) de la lame (30) est orienté vers la pièce, et
l'ouverture d'évacuation (47) est configurée pour pouvoir être raccordée à un tuyau d'aspiration d'un collecteur de poussière prévu à l'extérieur.

5. Outil de coupe (10) selon l'une quelconque des revendications 1 à 4, dans lequel
l'auxiliaire de coupe (40) comprend un corps principal de sabot (41), une partie d'étai (51) et une partie de tige (57) reliant le corps principal de sabot (41) et la partie d'étai (51), dans lequel le corps principal de sabot (41) comprend une partie de paroi de surface avant (421), des parties de paroi de surface latérale gauche et droite (422, 423), des parties de paroi de surface supérieure et inférieure (424, 425), une partie de paroi de surface arrière (426) et une partie creuse intérieure,
un trou traversant de lame (43) à travers lequel la lame (30) s'étend est formé dans la partie de paroi de surface avant (421) et la partie de paroi de surface arrière (426), et
la partie creuse intérieure du corps principal de sabot (41) est réalisée sous la forme d'un trajet de transport (48) de copeaux pour transporter des copeaux de la pièce aspiré par l'ouverture d'aspiration (45).

6. Outil de coupe (10) selon la revendication 5, dans lequel
la partie de paroi de surface avant (421) est munie d'ouvertures d'aspiration de surface avant (45),
les ouvertures d'aspiration de surface avant (45) comprennent une première ouverture d'aspiration de surface avant (451) et une seconde ouverture d'aspiration de surface avant (452) situées sur les côtés gauche et droit du trou traversant de lame (43), et
les longueurs dans un sens vertical de la première ouverture d'aspiration de surface avant (451) et de la deuxième ouverture d'aspiration de surface avant (452) sont supérieures à la longueur dans le sens vertical du trou traversant de lame (43).
